# FASCICULE DE BREVET EUROPEEN

(11) **EP 2 416 193 B1**
(45) Date de publication et mention de la délivrance du brevet: **02.05.2018**
(21) Numéro de dépôt: 11174973.5
(22) Date de dépôt: 22.07.2011
(51) Int. Cl.: G02B 6/38, G02B 6/44

(54) **Connecteur optique sous-marin**
Optisches Unterwasserverbindungsstück
Underwater optical connector

(30) Priorité: 03.08.2010 FR 1056407
(43) Date de publication de la demande: 08.02.2012
(73) Titulaire: Carrier Kheops Bac, 72700 Allonnes (FR)
(72) Inventeur: Lagathu, Cédric, 72210 LOUPLANDE (FR); Prel, Christophe, 72200 LA FLECHE (FR)
(74) Mandataire: Radault, Gabrielle

(56) Documents cités:
- EP-A1- 2 053 433
- WO-A1-86/02173
- WO-A2-01/40837
- FR-A1- 2 885 421
- US-A- 4 432 603
- US-A- 4 682 848

## Description

L'invention concerne un connecteur optique sous-marin.

Les connecteurs optiques sous-marins sont agencés pour raccorder deux (ou davantage) fibres optiques tout en étant sous l'eau.

Ces connecteurs peuvent en particulier être utilisés pour l'extraction sous-marine de combustibles. En effet, on dispose en général autour d'un puits de forage un certain nombre de capteurs, de pression, température, ou autres, afin de réaliser une cartographie de la région à forer ou forée. La fibre optique peut être utilisée pour mettre en communication ces capteurs avec une plate-forme d'extraction. La fibre optique présente notamment l'avantage d'être relativement peu sensible aux champs électromagnétiques environnants.

Ainsi, un connecteur optique peut permettre de raccorder tel ou tel capteur à la plate-forme. Les connecteurs optiques sous-marins sont agencés de façon à pouvoir être connectés et déconnectés sous l'eau. On prévoit de façon générale un nettoyage des parties de contact de fibre optique par du gel pour évacuer les éventuelles impuretés susceptibles de perturber la transmission du signal par la mise en contact des parties de contact.

Des connecteurs optiques à férule ont été utilisés. Pour chaque couple de fibres optiques (ou voie) à raccorder, on prévoit deux éléments de support apte à supporter chacun une fibre correspondante et à venir en contact l'un contre l'autre, ainsi qu'un manchon pour garantir le bon alignement des fibres.

Le document FR 2 885 421 décrit ainsi un exemple de connecteur optique sous-marin.

Le document WO 01/40837 décrit un autre exemple de connecteur optique sous-marin.

Il existe un besoin pour un connecteur optique sous-marin offrant de meilleures performances.

Il est proposé un connecteur optique sous-marin selon la revendication 1 comprenant:
- un premier élément de support pour supporter une première fibre optique, ce premier élément de support comportant au moins une pin d'alignement,
- un deuxième élément de support pour supporter une deuxième fibre optique, ce deuxième élément de support comportant au moins un trou traversant destiné à recevoir respectivement la au moins une pin d'alignement pour guider les premier et deuxième éléments de support vers une position de contact dans laquelle la première et la deuxième fibre sont raccordées, et
- des moyens d'étanchéité pour protéger la première et la deuxième fibre du milieu extérieur au moins lorsque les premier et deuxième éléments de support sont dans la position de contact.

Ainsi, la pin et le trou traversant forment un moyen d'alignement des éléments de support l'un par rapport à l'autre qui favorise la circulation de fluide dans la zone de contact des fibres. Préalablement à la connexion, un liquide, par exemple un gel, peut aisément circuler entre les éléments de support pour évacuer les éventuelles impuretés, contrairement aux connecteurs optiques sous-marins de l'art antérieur pour lesquels le manchon d'alignement vient créer une cavité.

Le contact entre fibres est ainsi assuré sans impuretés, ce qui permet d'obtenir de meilleures performances optiques de transmission, notamment en termes de pertes d'insertion et de minimiser le taux de reflexion ou pertes par réflexion (« back reflexion » en anglais).

Avantageusement et de façon non limitative, le moyen d'alignement peut comporter au moins deux pins et au moins deux trous traversants correspondants. Le moyen d'alignement formé par les pins et les trous traversants correspondants peut être agencé de façon à empêcher en position de contact tout mouvement relatif d'un élément de support par rapport à l'autre dans une direction non colinéaire à un axe longitudinal des pins et des trous. Ainsi, chaque élément de support peut supporter une pluralité de premières ou deuxièmes fibres optiques. Le raccordement de la pluralité de couples de fibres optiques peut ainsi être effectué avec moins de mises au point que dans l'art antérieur, dans lequel on compte autant de paires d'éléments de support que de voies (ou couples de fibres).

En outre, la concentration de fibres optiques sur une seule paire d'éléments de support permet de limiter la quantité de liquide à utiliser pour chaque nettoyage.

On limite en outre les risques liés à une répartition non homogène du gel entre les différentes voies.

Avantageusement et de façon non limitative, le connecteur optique sous-marin peut comprendre une matrice de fibres (« fibers array » en anglais), notamment une férule MT. Le connecteur optique sous-marin est ainsi relativement robuste et peut ainsi être manipulé par un robot.

L'invention n'est en rien limitée aux férules MT. Par exemple, le connecteur optique sous-marin peut comprendre une matrice de fibres à bloc de verre, ou autre. Le connecteur comprend deux parties comprenant chacune un élément de support correspondant, chaque partie comprenant un moyen d'étanchéité pour assurer l'étanchéité de la partie correspondante à l'état déconnecté. Ainsi, une première partie comprend le premier élément de support et un premier moyen d'étanchéité, et une deuxième partie comprend le deuxième élément de support et un deuxième moyen d'étanchéité.

Le connecteur comporte un troisième moyen d'étanchéité pour protéger le connecteur à l'état connecté du milieu extérieur, par exemple d'un milieu turbide.

Le connecteur est agencé de sorte que les premiers et deuxième moyens d'étanchéité passent d'une position de fermeture étanche à une position d'ouverture lorsque le troisième moyen d'étanchéité est dans une position de protection du milieu extérieur.

Ainsi, à l'état déconnecté, les éléments de support et les fibres optiques sont protégés du milieu extérieur par les premiers et deuxième moyens d'étanchéité, ces moyens d'étanchéité restant actifs au moins jusqu'à ce que le troisième moyen d'étanchéité permette à son tour de protéger le connecteur à l'état connecté. Les éléments de support et les fibres optiques sont ainsi relativement protégés du milieu extérieur, ce qui permet de limiter les quantités d'impuretés à nettoyer et donc la quantité de gel nécessaire pour un nettoyage des parties de contact. Le troisième moyen d'étanchéité comporte un joint disposé à une extrémité de l'une des parties pour l'étanchéification à l'état connecté. Le joint est agencé de façon à autoriser la circulation de liquide de l'intérieur du connecteur vers l'extérieur, et à interdire la circulation de liquide dans le sens inverse. Ainsi le connecteur est agencé de façon à autoriser l'expulsion de gel de nettoyage et à protéger l'intérieur du connecteur du milieu environnant. Le connecteur comporte des moyens pour maintenir un jeu entre la première partie et la deuxième partie, ces moyens étant un ou plusieurs plots montés sur l'extrémité de l'une des parties. Ce jeu entre les parties permet le passage du gel en cours d'évacuation.

Avantageusement et de façon non limitative, l'un au moins parmi les premier et deuxième moyens d'étanchéité comprend un obturateur apte à passer de la position de fermeture étanche à la position d'ouverture en pivotant autour d'un axe sensiblement perpendiculaire à un axe longitudinal du connecteur afin d'aligner l'obturateur avec cet axe longitudinal.

Ainsi, en position de fermeture étanche, l'obturateur est incliné par rapport à l'axe longitudinal, de sorte que lorsqu'un robot (ou autre) vient pousser une partie du connecteur contre l'autre, une pièce venant en butée contre l'obturateur pousse l'obturateur vers la position d'ouverture. L'ouverture de l'obturateur peut donc être effectuée dans le cadre d'une simple poussée par un robot, sans commande spécifique.

Avantageusement et de façon non limitative, un ressort permet de ramener l'obturateur en position inclinée lorsque la pièce venant en butée est retirée, lors d'une déconnexion. L'obturateur retrouve ainsi la position de fermeture étanche, protégeant la fibre correspondante du milieu environnant.

Avantageusement et de façon non limitative, le premier et le deuxième moyens d'étanchéité comprennent un tel obturateur.

Avantageusement et de façon non limitative, chaque obturateur comprend un élément de prise, les deux éléments de prise étant aptes à s'engager l'un avec l'autre. L'ouverture des obturateurs est ainsi synchronisée. En effet, il peut arriver que l'un des obturateurs soit grippé, par exemple à cause d'un grain de sable : la synchronisation des ouvertures permet d'éviter que cet obturateur ne reste en position de fermeture étanche, ce qui entraînerait des dégradations au niveau de l'élément de support et/ou de la fibre de l'autre partie du connecteur, venant, sous l'effet de la poussée du robot, buter contre l'obturateur resté fermé.

Avantageusement et de façon non limitative, au moins une et de préférence les deux parties de connecteur comportent une fenêtre susceptible d'être obturée par l'obturateur correspondant.

Avantageusement et de façon non limitative, au moins une et de préférence les deux fenêtres comportent un bord conçu pour éviter l'accumulation d'impuretés sur ce bord. Par exemple le bord comprend un joint avec des dents. En effet, à l'état déconnecté, la fenêtre de chaque partie de connecteur est en contact avec le milieu ambiant, de sorte que des impuretés sont susceptibles de se déposer sur le bord de la fenêtre et de venir polluer l'intérieur du connecteur lors de l'ouverture de l'obturateur. Une conception astucieuse du bord de la fenêtre avec des dents peut permettre de limiter la quantité d'impuretés gênantes.

Avantageusement et de façon non limitative, le connecteur comporte des moyens d'alignement grossiers des deux parties de connecteur, par exemple un système de clavettes rainures.

Avantageusement et de façon non limitative, le connecteur comporte au moins une et de préférence deux rotules solidaires des éléments de support correspondants pour compenser les défauts d'alignement.

Avantageusement et de façon non limitative, le connecteur optique sous-marin peut comprendre une réserve de gel pour le nettoyage de l'intérieur du connecteur.

Avantageusement et de façon non limitative, le connecteur optique sous-marin est agencé de sorte qu'en cas de poussée des mouvements internes se produisent, de sorte que le volume intérieur est réduit. La pression interne augmente, et du gel présent dans ce volume intérieur est expulsé par le passage entre les deux parties de connecteur et le joint protégeant ces deux parties du milieu extérieur, réalisant ainsi un nettoyage de l'intérieur du connecteur.

Plus particulièrement, au moins une partie de connecteur peut être agencée de façon à définir une chambre dont le volume augmente lorsque la partie subit les efforts de compression conduisant au passage de la position de fermeture étanche à la position d'ouverture du moyen d'étanchéité correspondant.

Ce volume est rempli de gel, ce qui peut permettre de limiter la quantité de gel expulsée lors de l'ouverture des obturateurs, et donc d'éviter de gaspiller du gel à ce premier nettoyage.

Des modes de réalisation de l'invention sont à présent décrits en référence aux dessins annexés, sur lesquels :
-la figure 1 est une vue en coupe axiale d'un connecteur optique, parties fiche et embase en position déconnectée selon un mode de réalisation de l'invention,
- la figure 2 est une vue en coupe axiale partielle du connecteur de la figure 1 en cours de connexion, au moment de la mise en service du troisième moyen d'étanchéité et avant l'ouverture des premier et deuxième moyen d'étanchéité,
- la figure 3 est une vue en coupe axiale du connecteur analogue à la figure 2 montrant l'ouverture des premier et deuxième moyens d'étanchéité ou obturateurs de face avant des parties fiche et embase du connecteur,
- La figure 4 est une vue analogue à celle de la figure 2 montrant le connecteur optique en position connectée.

Dans la suite, les pièces identiques ou similaires sur les dessins seront désignées par les mêmes références numériques.

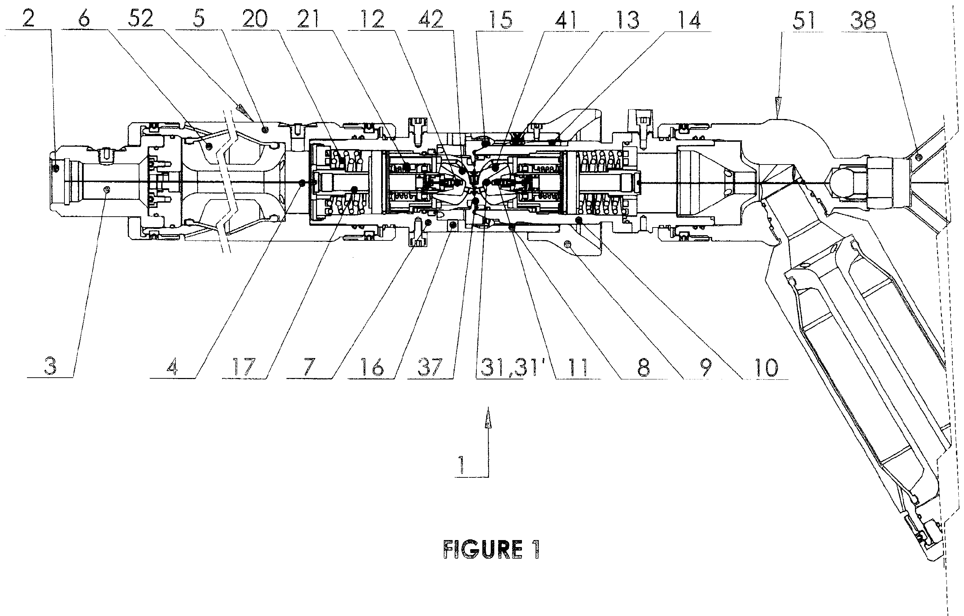

Le connecteur optique 1, destiné à une application sous-marine, tel que représenté à la figure 1 comprend une partie fixe ou embase 52 et une partie mobile ou fiche 51 destinée à être enfichée dans l'embase 52.

La fiche 51 et l'embase 52 comportent respectivement un premier et un deuxième moyens d'étanchéité, ici des obturateurs 41, 42.

L'embase 52 est de configuration cylindrique et comporte successivement de la gauche vers la droite, comme représenté sur le dessin, une partie arrière 2 destinée à être reliée de façon hermétique à un câble optique 3 composé de fibres optiques 4 (rubanisé ou non), une partie de corps 5 logeant notamment un réservoir 6 de gel ou fluide optique de nettoyage des parties de contact (en périphérie du passage des fibres optiques 4), une partie 7 logeant les éléments actifs de contact, et une partie avant à forme de manchon 8 reliée coaxialement à la partie du corps 5.

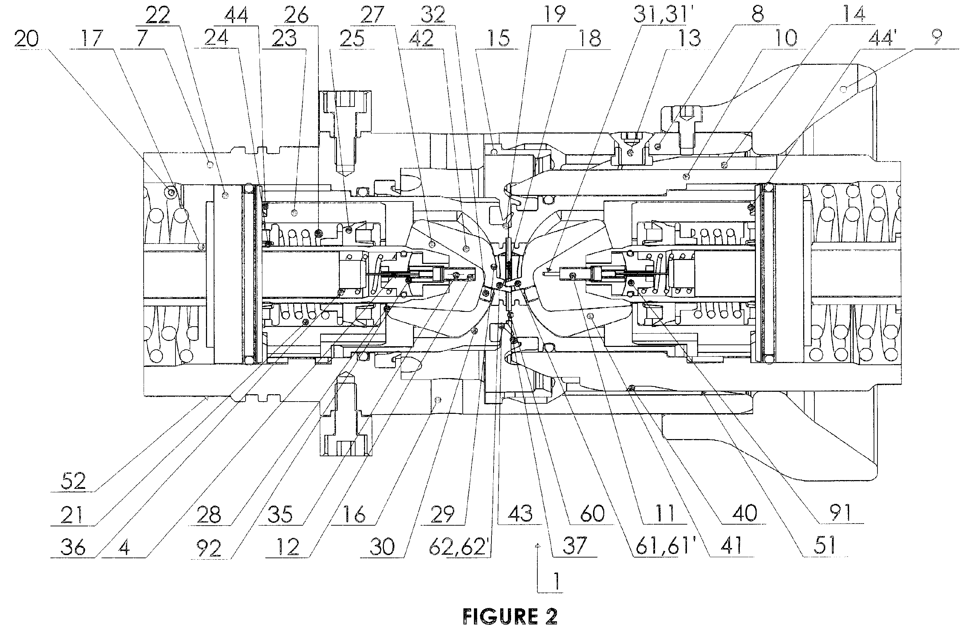

La partie avant à forme de manchon 8 (cf. aussi la figure 2) a une ouverture 9 évasée vers l'extérieur à son extrémité et est destinée à recevoir et guider à la connexion la partie avant 10 (complémentaire) de la fiche.

Cette partie avant 8 comporte un élément de clavette 13 (vis) en saillie sur sa paroi interne et destiné à guider la fiche 51 dans une orientation angulaire déterminée (parallèle au plan du dessin) par une rainure 14 de la fiche de section complémentaire de la clavette 13. Cette partie avant 8 comporte également un clip 15 de verrouillage de la fiche en position connectée et des trous 16 de passage de gel ou fluide optique dans la paroi de la partie de corps 5.

La partie 7 logeant les éléments actifs de contact comporte successivement de la gauche vers la droite sur le dessin une partie 17 support des fibres optiques 4, un élément support 12 de fibres optiques, par exemple un élément de férule MT, et un obturateur 42 d'une fenêtre 18 formée sur la face avant 19 de la partie de corps formant le deuxième moyen d'étanchéité pour assurer l'étanchéité de l'embase 52 en position déconnectée.

La partie support des fibres optiques 17 est disposée dans l'axe de l'embase, étant reliée au câble optique 3. Cette partie 17 est de conformation cylindrique et autour de cette partie se trouvent successivement de la gauche vers la droite un ensemble de ressorts hélicoïdaux puissants 20, une chambre à gel 21 formant la pompe à gel et l'obturateur 42.

L'ensemble de ressorts hélicoïdaux 20 s'applique contre un élément piston 22 monté coulissant de façon étanche sur une jupe arrière 23 de la chambre à gel 21.

La chambre à gel 21 est cylindrique et loge deux joints à lèvre en V à ses extrémités, un premier joint fixe 24 et un deuxième joint 25 proche de l'obturateur 42 et monté mobile dans l'alésage de la chambre à gel, ce joint étant maintenu en position relativement au premier 24 par un ressort hélicoïdal intérieur 26 disposé entre ces deux joints 24, 25. Le deuxième joint 25 fonctionne comme un joint de valve, cette disposition permettant de laisser passer du fluide vers l'extérieur sous pression par la périphérie du deuxième joint 25 dans l'obturateur 42 sous la diminution du volume de la chambre à gel 21, laquelle coulisse sur la partie support 17 en raison de la poussée de l'obturateur à la connexion, et d'aspirer du gel du réservoir de gel au retour, à la déconnexion, du gel étant alors introduit par le premier joint 24.

L'obturateur 42 comporte un évidement intérieur central en U 27, évasé vers l'extérieur à ses extrémités dans lequel il reçoit la partie d'extrémité de la partie support 17, dont l'élément support ou férule MT 12 au bout de la partie support 17.

Cet obturateur 42 est appliqué en position non connectée de façon inclinée sur une face d'extrémité verticale 28 de la chambre à gel, étant maintenu à cette position inclinée par un élément ressort non représenté. L'obturateur 42 est monté mobile en rotation, sa face avant 29 glissant dans une cage à rotule 30, de façon à venir en position co-axiale à l'axe de l'embase sous la poussée de la face 28 de la chambre à gel.

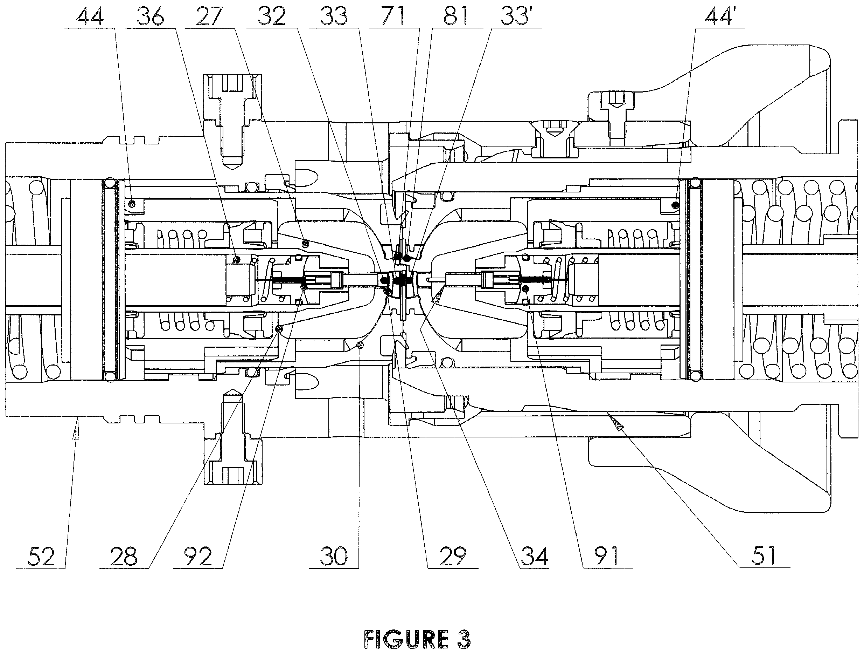

L'obturateur 42 comporte en outre une ouverture 32 au sommet de l'évidement 27 destinée à permettre le passage de la férule MT, à la connexion, en position coaxiale à l'axe de l'embase. Cette ouverture 32, en position co-axiale de l'obturateur, est en regard d'une fenêtre 33 de la face avant 19 (figure 3) dont le bord 71 est rainuré (selon des rainures ou dents 81) pour y empêcher l'accumulation de salissures du milieu extérieur.

L'obturateur 42 comporte en outre un ensemble de deux doigts 62, 62' décalés en hauteur l'un par rapport à l'autre et venant en saillie en position inclinée de l'obturateur 42 dans la fenêtre 33, l'obturateur 42 fermant la fenêtre 33 en position inclinée.

L'élément support 12 ou férule MT, comporte un ensemble de un à n-contacts optiques (jusqu'à 48 voire même 72 contacts optiques de fibres) supportant chacun le bout des fibres optiques 4. L'élément support 12 pivote sur une rotule 92 à son extrémité arrière, étant maintenu en ligne par un ressort de liaison hélicoïdal 36. Cette férule MT comporte deux trous traversants 35 (en trait interrompu) écartés l'un de l'autre et disposés dans un plan horizontal et perpendiculaire à celui du dessin. Ces trous traversants sont destinés à recevoir les pins (complémentaires) 31, 31' d'un élément support 11 monté sur rotule 91 de la fiche (figure 2). Les pins sont de forme effilée à leur bout pour compenser encore les éventuels défauts d'alignement.

La fiche 51 du connecteur (figure 2) est complémentaire de l'embase 52 et comporte les mêmes éléments en symétrie par rapport au plan de connexion de leur face avant 37 et 19, respectivement. L'élément support 11 des fibres optiques de la fiche comporte notamment les deux pins 31, 31' destinés à pénétrer les trous traversants 35 de l'élément support 12 de fiche de l'embase.

Enfin, la face avant 19 de la partie de corps de l'embase comporte un joint à lèvre 43 évasé vers l'extérieur et destiné à porter contre la face avant 37 de la fiche à la connexion, ce joint 43 autorisant l'expulsion de gel de l'intérieur du connecteur vers l'extérieur, à la connexion, mais interdisant toute pénétration du milieu externe.

Ce joint constitue donc un troisième moyen d'étanchéité, pour protéger le connecteur 1 du milieu extérieur lorsque la fiche 51 et l'embase 52 sont connectées entre elles.

Des plots 60 sont en outre prévus sur les faces avant 19 et 37 pour ménager un espace de jeu à la connexion entre la face avant 37 de la fiche et la face avant 19 de l'embase (plan de connexion).

Le fonctionnement du connecteur à la connexion est à présent décrit.

On engage la fiche 51 en alignement grossier dans le manchon 8 de l'embase 52, au moyen d'un robot ou autre (non représenté) actionnant la poignée 38 de la fiche. La fiche 51 est présentée convenablement orientée angulairement sur l'embase et le guidage de la fiche par l'ouverture 9 dans le manchon de l'embase 8 est réalisé à l'aide du système clavette 13 et rainure 14 précité.

Le joint à lèvre 43 et les plots 60 de l'embase viennent en contact avec la face avant 37 (figure 2).

Les doigts de prise 61, 61', 62, 62' de chacun des obturateurs, viennent en prise l'un à l'autre, deux à deux de façon croisée à la manière d'un engrenage.

Sous la poursuite de l'engagement de la fiche, les obturateurs 41, 42 sont poussés par leur face arrière sur la face avant 28 de la chambre à gel correspondante et ils se tournent de façon synchronisée grâce aux doigts de prise 61, 61', 62, 62' en alignement de l'axe du connecteur, ouvrant les fenêtres 33, 33' des faces avant de l'embase et de la fiche (figure 3).

La chambre à gel 21 est alors comprimée et du gel de la chambre est expulsé à la périphérie du deuxième joint 25 de chambre comme mentionné précédemment, jusque dans l'obturateur (ceci de façon symétrique pour chacun des obturateurs 41,42), sur les éléments supports 11, 12 (dont les faces avants des contacts 34 de fibre en vue de les nettoyer), et à travers chacune des fenêtres 33, 33' dans l'espace de jeu du plan de connexion. Une partie du gel est évacuée hors de l'espace de jeu de face avant par le joint à lèvre 43 sans que le milieu extérieur ne puisse y rentrer.

Le connecteur comporte en outre une chambre 44 (44' pour la fiche) externe à la chambre à gel 21 et dont le volume rempli de gel augmente sous l'action des ressorts 20 au moment de l'ouverture de l'obturateur 42. Cette chambre 44 et de même la chambre 44', permet de limiter la quantité de gel expulsée lors de l'ouverture des obturateurs, et donc d'éviter de gaspiller du gel à ce premier nettoyage.

Puis, les éléments supports de fibre 11, 12 de chacune des parties de connecteur, fiche et embase, sont approchés l'un de l'autre. Les pins 31, 31' de la férule MT de la fiche rentrent dans les trous traversants 35 complémentaires de la férule MT de l'embase, s'engageant dans ceux-ci par leur pointe. Les éléments supports 11, 12 peuvent pivoter chacun par leur rotule 91, 92 sous le guidage des pins dans les trous, pour compenser un défaut d'alignement des pins et des trous. Ces pins sont enfoncés complètement dans les trous traversants correspondants, tandis que sous la compression de la chambre de gel 21, du gel continue d'être évacué en vue de nettoyer les contacts et le plan de connexion 34. Le contact de bout de fibre 34 des éléments supports de fibre optique 11, 12 s'établit alors, les ressorts de liaison 36 amortissant la mise en butée de contact des éléments supports 11, 12.

La fiche peut être enfoncée en butée 39 sur l'embase et revenir en fin de connexion légèrement vers l'arrière, le clip de verrouillage 15 venant en prise dans une rainure annulaire interne 40 correspondante du manchon de la fiche.

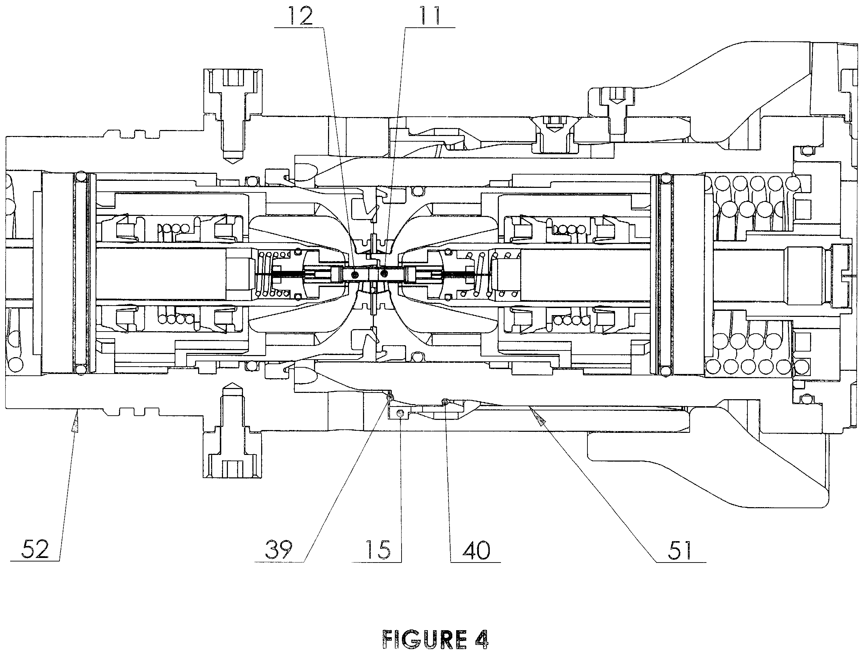

Le connecteur est à présent verrouillé en position connectée (figure 4).

La déconnexion (non représentée) est réalisée de manière inverse à la connexion précitée.

La traction du robot sur la fiche dégage le clip 15 de la rainure interne 40 du manchon et la fiche peut alors ressortir de l'embase. Les ressorts 20, 26, 36 comprimés à la connexion se détendent pour ramener les pièces à leur position d'origine. Ainsi, les pins 31, 31' sortent des trous traversants 35 et les éléments supports 11, 12 s'éloignent l'un de l'autre revenant dans chacune des parties respectives fiche et embase tandis que les obturateurs 41, 42 se referment avant que la face avant 37 de la fiche ne s'écarte de la face avant 19 d'embase.

Ce faisant, la chambre à gel 21 reprend son volume d'origine et se recharge en gel introduit par la périphérie du joint 24 de chambre, en vue d'un nouveau cycle de connexion du connecteur. Les fiche et embase sont alors déconnectées et isolées du milieu externe.

## Revendications

1. Connecteur optique sous-marin (1), agencé pour pouvoir être connecté et déconnecté sous l'eau, ledit connecteur étant agencé pour, en cas de connexion, réaliser un nettoyage préalablement à la connexion par une circulation de liquide, par exemple un gel, entre un premier et un deuxième éléments de support à l'intérieur du connecteur, ledit connecteur comprenant:
- une première partie (51) comprenant le premier élément de support (11) pour supporter une première fibre optique, ledit premier élément de support comportant au moins une pin d'alignement (31, 31'),
- une deuxième partie (52) comprenant le deuxième élément de support (12) pour supporter une deuxième fibre optique, ledit deuxième élément de support comportant au moins un trou traversant (35) destiné à recevoir respectivement ladite au moins une pin d'alignement pour guider les premier et deuxième éléments de support vers une position de contact dans laquelle la première et la deuxième fibre sont raccordées, et
- des moyens d'étanchéité (41, 42, 43) pour protéger la première et la deuxième fibre du milieu extérieur au moins lorsque les premier et deuxième éléments de support sont dans la position de contact, lesdits moyens d'étanchéité comprenant
un premier moyen d'étanchéité (41) pour assurer l'étanchéité de la première partie lorsque ladite première partie est déconnectée de la deuxième partie,
un deuxième moyen d'étanchéité (42) pour assurer l'étanchéité de la deuxième partie lorsque ladite deuxième partie est déconnectée de la première partie, et
un troisième moyen d'étanchéité (43) pour protéger le connecteur du milieu extérieur lorsque les première et deuxième parties sont connectées entre elles, ledit troisième moyen d'étanchéité comprenant un joint disposé à une extrémité de l'une des parties, ledit joint étant agencé de façon à autoriser lorsque les première et deuxième parties sont connectées entre elles, la circulation de liquide de l'intérieur du connecteur vers l'extérieur, afin d'évacuer les éventuelles impuretés du contact optique, et de façon à interdire la circulation de liquide dans le sens inverse,
dans lequel
le connecteur est agencé de sorte que les premiers et deuxièmes moyens d'étanchéité passent d'une position de fermeture étanche à une position d'ouverture lorsque le troisième moyen d'étanchéité est dans une position de protection du milieu extérieur, et
le connecteur comporte au moins un plot (60) pour maintenir un jeu entre la première partie et la deuxième parties lorsque les première et deuxième parties sont connectées entre elles pour le passage de gel nettoyant vers l'extérieur du connecteur.

2. Connecteur optique sous-marin (1) selon la revendication 1, dans lequel le premier élément de support (11) comporte au moins deux pins d'alignement (31, 31') et le deuxième élément de support (12) comporte au moins deux trous traversants (35) destinés à recevoir respectivement lesdits au moins deux pins d'alignement,
**caractérisé en ce que**
le premier élément de support est agencé pour supporter une pluralité de premières fibres optiques, et le deuxième élément de support est agencé pour supporter une pluralité de deuxièmes fibres optiques de sorte qu'en position de contact chaque première fibre optique soit raccordée à une deuxième fibre optique correspondante.

3. Connecteur optique sous-marin (1) selon l'une quelconque des revendications 1 ou 2, comportant une matrice de fibres.

4. Connecteur optique sous-marin (1) selon l'une quelconque des revendications 1 à 3, comprenant au moins une rotule (91, 92) solidaire d'un élément de support (11, 12) correspondant pour compenser des éventuels défauts d'alignement.

5. Connecteur optique sous-marin (1) selon l'une quelconque des revendications 1 à 4, dans lequel l'un au moins parmi les premier et deuxième moyens d'étanchéité comprend un obturateur (41, 42) apte à passer de la position de fermeture étanche à la position d'ouverture en pivotant autour d'un axe sensiblement perpendiculaire à un axe longitudinal du connecteur afin d'aligner l'obturateur avec cet axe longitudinal.

6. Connecteur optique sous-marin (1) selon la revendication 5, dans lequel
le premier et le deuxième moyens d'étanchéité comprennent chacun un obturateur (41, 42),
chaque obturateur comprend un élément de prise, et
les deux éléments de prise (61, 62) sont aptes à s'engager l'un avec l'autre lors du passage à la position d'ouverture.

7. Connecteur optique sous-marin (1) selon l'une des revendications précédentes, dans lequel au moins une des parties (51, 52) de connecteur comporte une fenêtre susceptible d'être fermée par le moyen d'étanchéité correspondant,
**caractérisé en ce que**
la fenêtre comporte un bord (71) avec des dents (81) pour limiter l'accumulation d'impuretés sur ledit bord.

8. Connecteur optique sous-marin (1) selon l'une des revendications précédentes, dans lequel au moins une partie de connecteur peut être agencée de façon à définir une chambre (44) dont le volume augmente lorsque la partie subit les efforts de compression conduisant au passage de la position de fermeture étanche à la position d'ouverture du moyen d'étanchéité correspondant.

## Patentansprüche

1. Optisches Unterwasserverbindungsstück (1), das ausgebildet ist, um unter Wasser verbunden und gelöst werden zu können, wobei das Verbindungsstück ausgebildet ist, um bei einer Verbindung vor der Verbindung eine Reinigung durch eine Zirkulation von Fluid, beispielsweise eines Gels, zwischen einem ersten und einem zweiten Halteelement im Inneren des Verbindungsstücks durchzuführen, wobei das Verbindungsstück umfasst:
- einen ersten Teil (51), umfassend das erste Halteelement (11), um eine erste optische Faser zu halten, wobei das Halteelement mindestens einen Ausrichtungsstift (31, 31') aufweist,
- einen zweiten Teil (52), umfassend das zweite Halteelement (12), um eine zweite optische Faser zu halten, wobei das zweite Halteelement mindestens ein durchgängiges Loch (35) aufweist, das bestimmt ist, jeweils den mindestens einen Ausrichtungsstift zu empfangen, um das erste und das zweite Halteelement in eine Kontaktposition zu führen, in welcher die erste und die zweite Faser verbunden sind, und
- Dichtungsmittel (41, 42, 43), um die erste und die zweite Faser vor dem äußeren Milieu, mindestens wenn das erste und zweite Halteelement in der Kontaktposition sind, zu schützen, wobei die Dichtungsmittel umfassen
ein erstes Dichtungsmittel (41), um die Dichtigkeit des ersten Teils zu sichern, wenn der erste Teil vom zweiten Teil gelöst ist,
ein zweites Dichtungsmittel (42), um die Dichtigkeit des zweiten Teils zu sichern, wenn der zweite Teil vom ersten Teil gelöst ist, und
ein drittes Dichtungsmittel (43), um das Verbindungsstück vor dem äußeren Milieu zu schützen, wenn der erste und der zweite Teils voneinander verbunden sind, wobei das dritte Dichtungsmittel eine Dichtung aufweist, die an einem Ende von einem der Teile angeordnet ist, wobei die Dichtung derart ausgebildet ist, um, wenn der erste und der zweite Teil miteinander verbunden sind, die Zirkulation von Flüssigkeit im Inneren des Verbindungsstücks nach außen zu erlauben, um eventuelle Unreinheiten von dem optischen Kontakt zu entfernen und derart, um die Zirkulation von Flüssigkeit in der umgekehrten Richtung zu verhindern,
wobei
das Verbindungsstück derart ausgebildet ist, dass das erste und das zweite Dichtungsmittel aus einer dichten Verschlussposition in eine geöffnete Position wechseln, wenn das dritte Dichtungsmittel in einer Schutzposition vor dem äußeren Milieu ist, und
das Verbindungsstück mindestens einen Kontakt (60) aufweist, um ein Spiel zwischen dem ersten Teil und dem zweiten Teil aufrechtzuerhalten, wenn der erste und der zweite Teil für den Durchgang von Reinigungsgel nach außerhalb des Verbindungsstücks miteinander verbunden sind.

2. Optisches Unterwasserverbindungsstück (1) nach Anspruch 1, wobei das erste Halteelement (11) mindestens zwei Ausrichtungsstifte (31, 31') aufweist und das zweite Halteelement (12) mindestens zwei durchgängige Löcher (35) aufweist, die bestimmt sind, jeweils die zwei Ausrichtungsstifte zu empfangen,
**dadurch gekennzeichnet, dass**
das erste Halteelement ausgebildet ist, um eine Vielzahl erster optischer Fasern zu halten und das zweite Halteelement ausgebildet ist, um eine Vielzahl zweiter optischer Faser zu halten derart, dass in Kontaktposition jede erste optische Faser mit einer entsprechenden zweiten optischen Faser verbunden ist.

3. Optisches Unterwasserverbindungsstück (1) nach einem der Ansprüche 1 oder 2, aufweisend eine Fasermatrix.

4. Optisches Unterwasserverbindungsstück (1) nach einem der Ansprüche 1 bis 3, umfassend mindestens ein mit einem entsprechenden Halteelement (11, 12) fest verbundenes Kugelgelenk (91, 92), um eventuelle Ausrichtungsfehler auszugleichen.

5. Optisches Unterwasserverbindungsstück (1) nach einem der Ansprüche 1 bis 4, wobei mindestens eins von dem ersten und zweiten Dichtungsmittel einen Verschluss (41, 42) umfasst, der imstande ist, durch Schwenken um eine Achse, die zu einer Längsachse des Verbindungsstücks etwa senkrecht ist, aus der dichten Verschlussposition in die geöffnete Position zu wechseln, um den Verschluss in dieser Längsachse auszurichten.

6. Optisches Unterwasserverbindungsstück (1) nach Anspruch 5, wobei
das erste und das zweite Dichtungsmittel jeweils einen Verschluss (41, 42) umfassen,
jeder Verschluss ein Eingriffselement umfasst, und
die zwei Eingriffselemente (61, 62) imstande sind, beim Übergang in die geöffnete Position ineinander einzugreifen.

7. Optisches Unterwasserverbindungsstück (1) nach einem der vorangehenden Ansprüche, wobei mindestens eins der Verbindungsstückteile (51, 52) ein Fenster aufweist, das imstande ist, von dem entsprechenden Dichtungsmittel verschlossen zu sein,
**dadurch gekennzeichnet, dass**
das Fenster einen Rand (71) mit Zähnen (81) aufweist, um die Anhäufung von Unreinheiten auf dem Rand zu begrenzen.

8. Optisches Unterwasserverbindungsstück (1) nach einem der vorangehenden Ansprüche, wobei mindestens ein Verbindungsstückteil derart ausgebildet sein kann, dass eine Kammer (44) definiert ist, deren Volumen zunimmt, wenn der Teil Kompressionskräften unterliegt, die zum Übergang aus der dichten Verschlussposition in die geöffnete Position des entsprechenden Dichtungsmittels führen.

## Claims

1. A submarine optical connector (1), arranged so as to be able to be connected and disconnected under water, said connector being arranged, in case of connection, to perform a cleaning prior to the connection by a circulation of liquid, for example a gel, between a first and a second support element inside the connector, said connector comprising:
- a first part (51) comprising the first support element (11) for supporting a first optical fibre, said first support element including at least one alignment pin (31, 31'),
- a second part (52) comprising the second support element (12) for supporting a second optical fibre, said second support element including at least one through hole (35) intended to receive respectively said at least one alignment pin to guide the first and second support elements towards a contact position in which the first and second fibres are connected, and
- sealing means (41, 42, 43) to protect the first and second fibres from the external environment at least when the first and second support elements are in the contact position, said sealing means comprising
a first sealing means (41) to ensure the seal-tightness of the first part when said first part is disconnected from the second part,
a second sealing means (42) to ensure the seal-tightness of the second part when said second part is disconnected from the first part, and
a third sealing means (43) to protect the connector from the external environment when the first and second parts are connected together, said third sealing means comprising a seal arranged at one end of one of the parts, said seal being arranged, when the first and second parts are connected together, so as to allow the circulation of liquid inside the connector towards the outside, to dispel any impurities from the optical contact, and to prevent the circulation of liquid in the reverse direction,
wherein
the connector is arranged so that the first and second sealing means switch from a seal-tight closed position to an open position when the third sealing means is in a position of protection from the external environment, and
the connector includes at least one stud (60) to maintain a clearance between the first part and the second part when the first and second parts are connected together for the passage of cleaning gel towards the outside of the connector.

2. The submarine optical connector (1) according to claim 1, wherein the first support element (11) includes at least two alignment pins (31, 31') and the second support element (12) includes at least two through holes (35) intended to receive respectively said at least two alignment pins,
**characterized in that**
the first support element is arranged to support a plurality of first optical fibres, and the second support element is arranged to support a plurality of second optical fibres so that, in the contact position, each first optical fibre is connected to a corresponding second optical fibre.

3. The submarine optical connector (1) according to any one of claims 1 or 2, including a fibre matrix.

4. The submarine optical connector (1) according to any one of claims 1 to 3, comprising at least one ball joint (91, 92) secured to a corresponding support element (11, 12) to compensate for any alignment defects.

5. The submarine optical connector (1) according to any one of claims 1 to 4, wherein at least one of the first and second sealing means comprises a shutter (41, 42) which can switch from the seal-tight closed position to the open position by pivoting about an axis substantially perpendicular to a longitudinal axis of the connector in order to align the shutter with this longitudinal axis.

6. The submarine optical connector (1) according to claim 5, wherein
the first and the second sealing means each comprise a shutter (41,42),
each shutter comprises an engaging element, and
the two engaging elements (61, 62) are able to be engaged with one another on the transition to the open position.

7. The submarine optical connector (1) according to one of the preceding claims, wherein at least one of the connector parts (51, 52) includes a window likely to be closed by the corresponding sealing means,
**characterized in that**
the window includes an edge (71) with teeth (81) to limit the build-up of impurities on said edge.

8. The submarine optical connector (1) according to one of the preceding claims, wherein at least one connector part can be arranged so as to define a chamber (44) whose volume increases when the part undergoes compression forces resulting in the switch from the seal-tight closed position to the open position of the corresponding sealing means.
